# EUROPEAN PATENT APPLICATION

(11) **EP 2 448 007 A1**
(43) Date of publication of application: **02.05.2012**
(21) Application number: 09846523.0
(22) Date of filing: 25.06.2009
(51) Int. Cl.: H01L 31/042

(54) **TERMINAL BOX FOR SOLAR CELL MODULE**

(71) Applicant: Mitsubishi Electric Corporation, Tokyo 100-8310 (JP)
(72) Inventor: NAKAZONO, Shinji, Tokyo 100-8310 (JP)
(74) Representative: Gleiter, Hermann
(86) International application number: PCT/JP2009/061651
(87) International publication number: WO 2010/150391

(57) **Abstract**

Provided are a heat dissipating plate (9A, 9B, 9C) with good thermal conductivity extending over the body bottom surface of a box body (20A), and four terminal strips (1A, 1B, 1C, 1D) with good thermal conductivity to which an output lead wire extending from a solar cell module (100) and a module coupling cable (16a, 16b) extending to outside is connected. A sealed portion (8a) of a diode (8A, 8B, 8C) provided for bypass in reverse loading is interposed between the heat dissipating plate (9A, 9B, 9C) and the terminal strips (1A, 1B, 1C, 1D). The heat can be dissipated efficiently from the lower surface of the sealed portion (8a) through the heat dissipating plate (9A, 9B, 9C) to the solar cell module (100). The heat can also be dissipated efficiently from the upper surface of the sealed portion (8a) through the terminal strips (1A, 1B, 1C, 1D) to the output lead wire and the module coupling cable (16a, 16b).

## Description

### Field

The present invention relates to a terminal box for a solar cell module that includes a bypass diode for bypass in reverse loading that bypasses the output of a solar cell for the purpose of preventing breakdown of a solar cell due to a reverse current.

### Background

A photovoltaic power generation system supplies DC power from a plurality of solar cell modules placed on a roof of a building through an inverter and the like to each electric appliance. The plurality of solar cell modules are connected in series through terminal boxes for the solar cell modules (hereinafter simply called as a terminal boxes) provided on the respective rear sides of the solar cell modules.

A terminal box conventionally known includes: a plurality of terminal strips arranged in parallel inside a casing, each terminal strip having one end connected to an output lead pulled out of a solar cell module through the rear side thereof and the other end connected to a module coupling cable; and a bypass diode for bypass in reverse loading that bridges between the terminal strips.

In a solar cell module, if some of solar cells are shaded and shielded from sunlight so that it does not generate power, a current in a reverse direction flows from a solar cell that is generating power to the solar cell not generating power. This may result in the breakdown of the cell. In order to prevent such breakdown of a solar cell due to a reverse current, a diode for prevent a reverse current, which is called a bypass diode, is generally connected. The bypass diode generates heat if a current flows while bypassing a solar cell not generating power. A rated temperature is exceeded if the heat cannot be dissipated well, resulting in the fear of breakdown.

When a solar cell module is mounted on a roof of a house and the like, the solar cell module is generally placed on a frame with a fixing bracket. Further, a terminal box for protecting the aforementioned bypass diode and connection terminals from external environment is disposed on the rear side of the solar cell module.

A bypass diode bridging between a plurality of terminal strips arranged in parallel in a terminal box generally has the following structure. The bypass diode has a sealed portion having a rectifying function based on a PN junction, and two leg electrodes extending from the sealed portion. The sealed portion is supported by one of two adjacent terminal strips. One of the leg electrodes is connected to this terminal strip, while the other leg electrode extends toward the other of the adjacent terminal strips, thereby bridging the terminal strips (see Patent Literature 1, for example).

### Citation List

### Patent Literature

Patent Literature 1: Japanese Patent Application Laid-open No. 2006-269803

### Summary

### Technical Problem

In the conventional technique described above, the bypass diode has the heat-generating sealed portion the lower surface of which is supported by the terminal strip made of metal. Accordingly, the heat can be dissipated to outside through the terminal strip. However, the above conventional technique has been desired to be improved as it cannot dissipate the heat especially from the upper surface of the sealed portion so that a sufficient amount of heat cannot be dissipated.

The present invention has been made in view of the aforementioned problems. It is an object of the invention to provide a terminal box for a solar cell module capable of dissipating the heat generated in a bypass diode efficiently from the upper and lower main surfaces of a sealed portion of the bypass diode.

### Solution to Problem

To solve the above problems and achieve the object, there is provided a terminal box forming an output part of a solar cell module according to the present invention including: a box body fixed to the solar cell module; at least two terminal strips with good thermal conductivity arranged in parallel in the box body, with an output lead wire extending from the solar cell module and an external cable extending to outside being connected to the terminal strips; a plurality of rectifying elements for bypass in reverse loading, the rectifying elements bridging the terminal strips, the rectifying elements each having a sealed portion that is resin-sealed, and a leg electrode extending from the sealed portion; and a heat dissipating plate with good thermal conductivity, the heat dissipating plate extending over a bottom surface of the box body, with the rectifying elements being placed on the heat dissipating plate, the sealed portions of the rectifying elements being interposed between the terminal strips and the heat dissipating plate.

### Advantageous Effects of Invention

According to the present invention, the terminal box includes the heat dissipating plate with good thermal conductivity, extending over the bottom surface of the box body, and the terminal strips with good thermal conductivity, to which the output lead wire extending from the solar cell module and the external cable (module coupling cable) extending to outside is connected. The sealed portions of the rectifying elements (bypass diodes) provided for bypass in reverse loading are interposed between the heat dissipating plate and the terminal strips. Thus, the heat can be dissipated efficiently from the lower surfaces of the sealed portions through the heat dissipating plate to the solar cell module. The heat can also be dissipated efficiently from the upper surfaces of the sealed portions through the terminal strips to the output lead wire and the external cable. Thus, a sufficient amount of heat can be dissipated as a whole.

### Brief Description of Drawings

FIG. 1 is a perspective view of a solar cell module to which a terminal box for a solar cell module according to a first embodiment of the invention is applied.
FIG. 2 is a perspective view of a solar cell module as viewed from the rear side thereof, wherein the solar cell module is provided with the terminal box for a solar cell module according to the first embodiment of the invention.
FIG. 3 is a perspective view of the terminal box from which a cover member is removed.
FIG. 4 is a perspective view of the terminal box from which the cover member and terminal strips are removed.
FIG. 5 is a front view of the terminal box from which the cover member is removed.
FIG. 6 is a cross-sectional view taken along line E-E of FIG. 5.
FIG. 7 is a cross-sectional view taken along line F-F of FIG. 5.
FIG. 8 is a front view of a rectifying element (bypass diode).
FIG. 9 is a schematic circuit diagram showing the connection state around the terminal box.
FIG. 10 is a front view of a terminal box for a solar cell module according to a second embodiment of the invention when a cover member and terminal strips are removed from the terminal box.
FIG. 11 is a cross-sectional view taken along line G-G of FIG. 10.
FIG. 12 is a longitudinal cross-sectional view showing part J of FIG. 11 in an enlarged manner.
FIG. 13 is a front view of a terminal box for a solar cell module according to a third embodiment of the invention when a cover member and terminal strips are removed from the terminal box.
FIG. 14 is a cross-sectional view taken along line H-H of FIG. 13.
FIG. 15 is a longitudinal cross-sectional view showing part K of FIG. 14 in an enlarged manner.

### Description of Embodiments

Embodiments of a terminal box for a solar cell module of the invention will be described in detail below based on the drawings. The present invention is not limited to the exemplary embodiments.

### First Embodiment

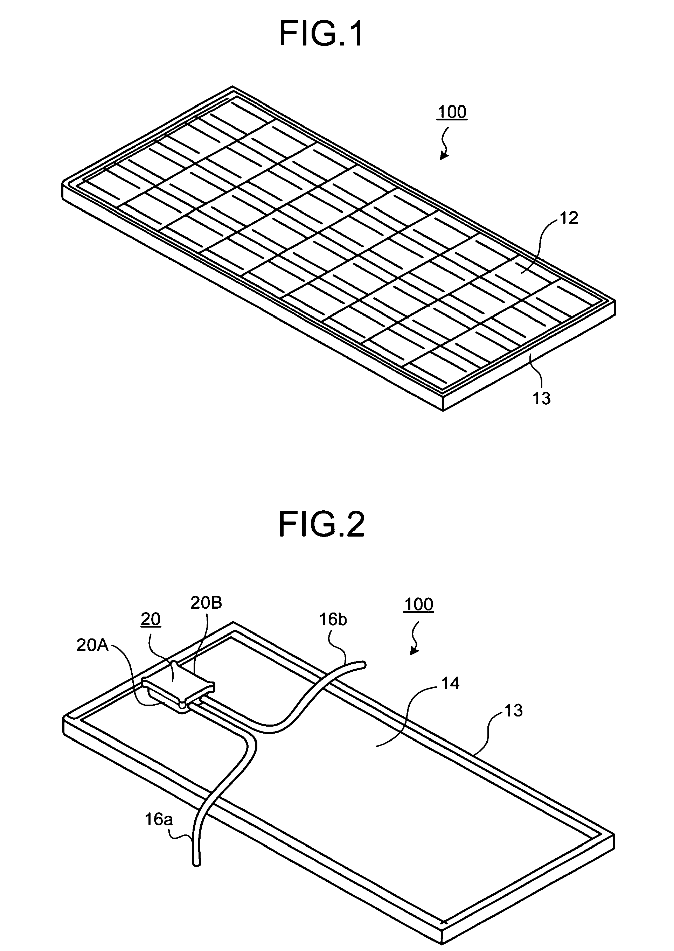

FIG. 1 is a perspective view showing a solar cell module to which a terminal box for a solar cell module of a first embodiment of the invention is applied. FIG. 2 is a perspective view of a solar cell module as viewed from the rear side, the solar cell module being provided with the terminal box for a solar cell module according to the first embodiment of the invention. A solar cell module 100 includes: a large number of solar cells 12 connected in series; a structure in which the solar cells 12 is protected by a front cover member highly transmissive, a rear cover member 14 with high weatherability, and a resin sealed between the front cover member and the rear cover member 14; an aluminum support frame 13 in the form of a rectangular frame for supporting the structure; and a terminal box 20 for a solar cell module (hereinafter simply called as a terminal box) attached to the rear cover member 14, the terminal box 20 configuring an output part of the solar cell module 100.

The terminal box 20 has a casing which is substantially in the form of a box and configures an outer shell. The casing is composed of a box body 20A and a cover member 20B. The cover member 20B substantially in the form of a plate closes an exposed surface of the box body 20A substantially in the form of a rectangular parallelepiped box having one exposed surface. The output part of the solar cell module 100 is housed inside the casing. In order to retrieve the output of the solar cell module 100, and to form connection to other solar cell modules, module coupling cables (external cables) 16a and 16b extending outward are connected to the output part.

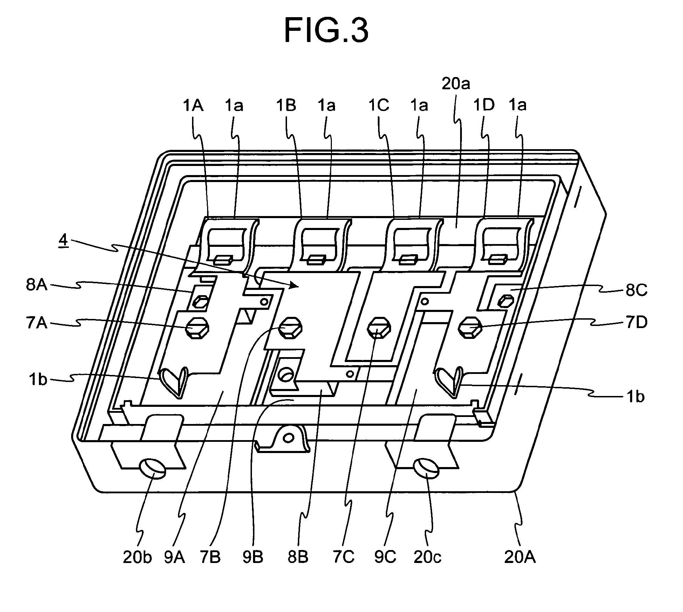

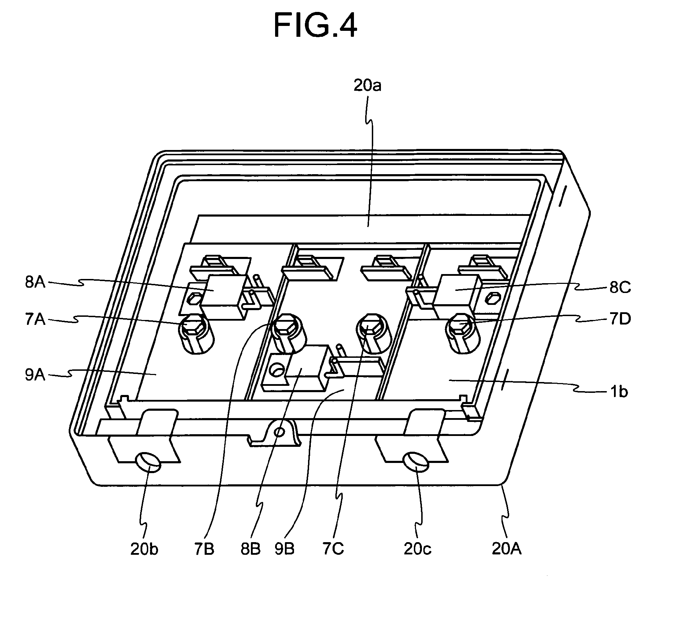

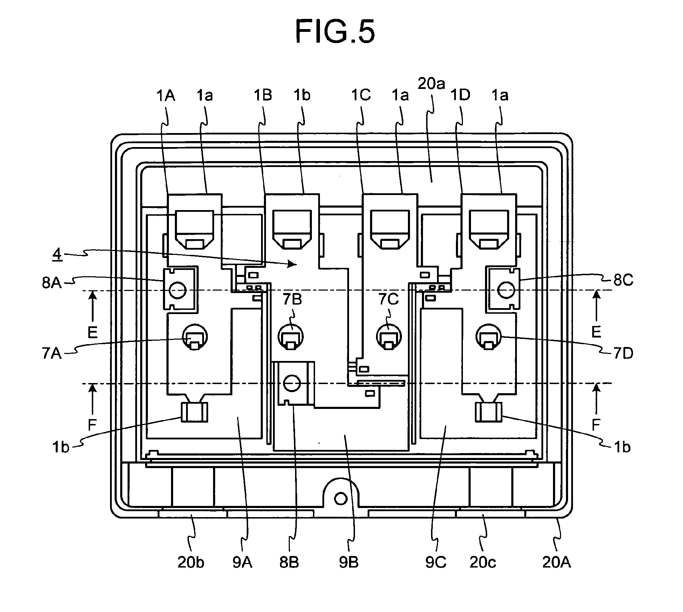

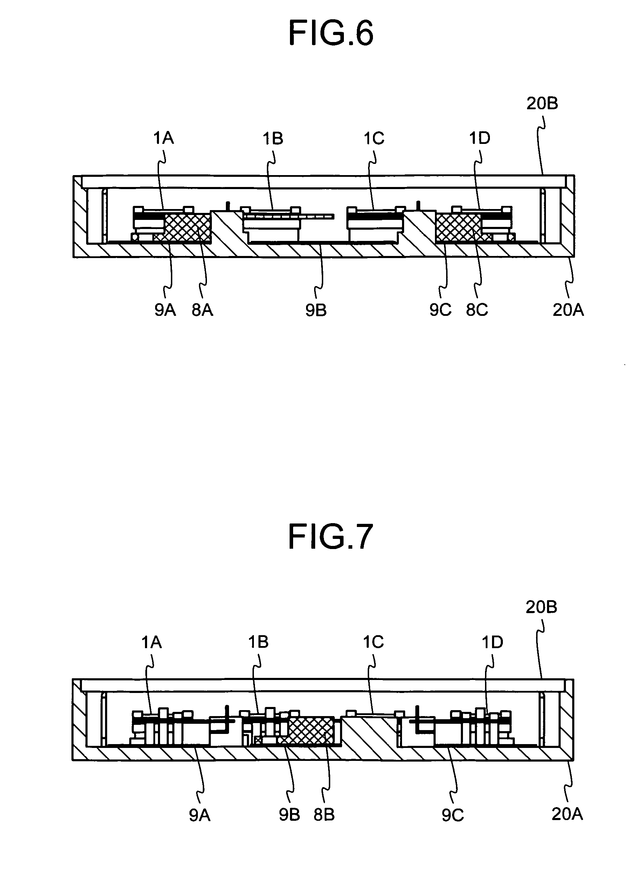

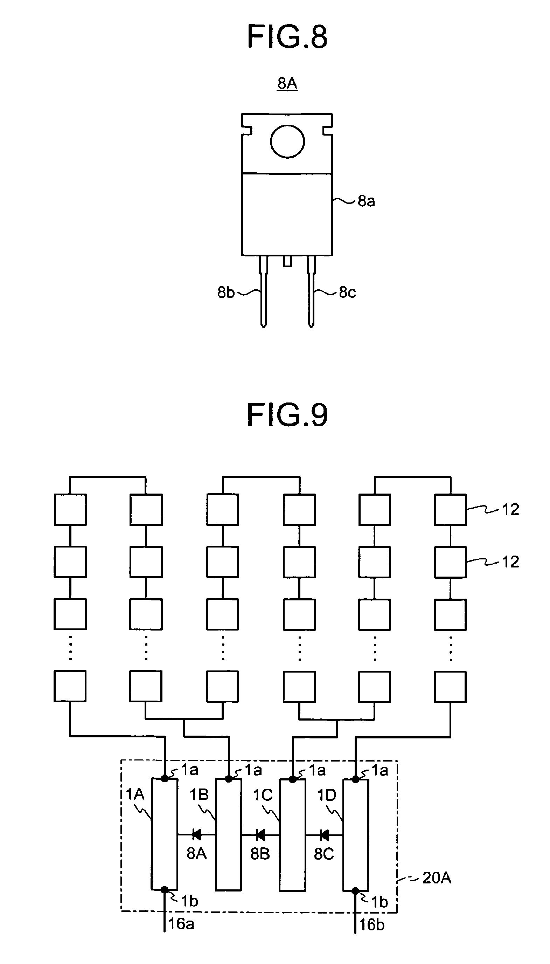

FIG. 3 is a perspective view of the terminal box 20 from which the cover member 20B is removed. FIG. 4 is a perspective view of the terminal box 20 from which the cover member 20B and terminal strips are removed. FIG. 5 is a front view of the terminal box after the cover member is removed. FIG. 6 is a cross-sectional view taken along line E-E of FIG. 5. FIG. 7 is a cross-sectional view taken along line F-F of FIG. 5. FIG. 8 is a front view of a rectifying element (bypass diode). FIG. 9 is a schematic circuit diagram showing the connection state around the terminal box.

The box body 20A is substantially in the form of a rectangular parallelepiped box, has a bottom surface and side surfaces surrounding all sides of the bottom surface, and houses an output part 4 thereinside. A rectangular lead wire entry 20a is formed along one side at the upper corner section, in the drawings, of the bottom surface of the box body 20A. Not-shown output lead wires extending from the inside of the solar cells 12 are inserted through the lead wire entry 20a. More specifically, the output lead wires are each a rectangular copper wire having surfaces plated with solder. Cable exit holes 20b and 20c through which the module coupling cables 16a and 16b (not shown) are pulled out are formed on a side surface opposite to the lead wire entry 20a.

The output part 4 is configured to include three heat dissipating plates 9A, 9B and 9C placed on the bottom surface of the box body 20, three bypass diodes for bypass in reverse loading (hereinafter simply called diodes) 8A, 8B and 8C, and four terminal strips 1A, 1B, 1C and 1D for connecting to external electric wires. The three heat dissipating plates 9A, 9B and 9C are made of a material with good thermal conductivity. The heat dissipating plates 9A, 9B and 9C extend over substantially the entire bottom surface of the box body 20, and face the solar cell module 100 (not shown) through the bottom surface of the box body 20 (FIG. 4). The three diodes 8A, 8B and 8C are placed on the three heat dissipating plates 9A, 9B and 9C, respectively.

Projections 7A, 7B, 7C and 7D projecting from the bottom surface of the box body 20A penetrate through the heat dissipating plates 9A, 9B and 9C toward the inside of the box body 20A. The four terminal strips 1A, 1B, 1C and 1D are made of a material with good thermal conductivity. The terminal strips 1A, 1B, 1C and 1D each have an attachment hole formed therein, and receive the projections 7A, 7B, 7C and 7D inserted into the attachment holes, whereby the terminal strips 1A, 1B, 1C and 1D are fixed to the projections 7A, 7B, 7C and 7D. The terminal strips 1A, 1B, 1C and 1D are disposed in parallel with each other in the horizontal direction in the drawings. The terminal strips 1A, 1B, 1C and 1D each have a longer side extending in the vertical direction in the drawings. The terminal strips 1A, 1B, 1C and 1D each have a lead wire connecting portion 1a at its upper end in the drawings, to which the output lead wire inserted through the lead wire entry 20a is connected with solder. The output lead wire extending from one end of each of the solar cells 12 connected in series is connected to the corresponding lead wire connecting portion 1a (FIGS. 5 and 9). The two terminal strips 1A and 1D which are parts at the extreme right and left of the four terminal strips 1A, 1B, 1C and 1D in the drawings each have a cable connecting portion 1b at its lower end in the drawings, to which the module coupling cable 16a or 16b is connected under pressure (FIGS. 5 and 9) .

The diodes 8A, 8B and 8C are disposed so as to be spaced apart from each other such that they are alternately arranged back and forth in a direction perpendicular to a direction in which the four terminal strips 1A, 1B, 1C and 1D are arranged. To be specific, the diodes 8A, 8B and 8C are disposed so as to be spaced apart from each other in a zigzag manner in the direction perpendicular to the direction in which the terminal strips 1A, 1B, 1C and 1D are arranged. The diodes 8A, 8B and 8C are interposed between the heat dissipating plates 9A, 9B and 9C, and the terminal strips 1A, 1B and 1D, respectively. As shown in FIG. 8, the diode 8A has a sealed portion 8a with a semiconductor element resin-sealed with an insulating resin material, and leg electrodes 8b and 8c extending from the sealed portion 8a. The sealed portion 8a has a rectangular flat shape, and one main surface thereof is provided with an exposed heat sink to enhance heat dissipation performance. The other two diodes 8B and 8C have the same structure. The diodes 8A, 8B and 8C are placed on the heat dissipating plates 9A, 9B and 9C while main surfaces on one side (lower surfaces) of the sealed portions 8a are in surface contact with the heat dissipating plates 9A, 9B and 9C, respectively, and main surfaces on the opposite side (upper surfaces) of the sealed portions 8a are in surface contact with the terminal strips 1A, 1B and 1D. Accordingly, the diodes 8A, 8B and 8C are interposed between the heat dissipating plates 9A, 9B and 9C, and the terminal strips 1A, 1B and 1D, respectively.

The diodes 8A, 8B and 8C each have a rectifying function based on a PN junction, and the two leg electrodes 8b and 8c thereof function as Negative and Positive electrodes, respectively. The diodes 8A, 8B and 8C cross over the terminal strips with the two leg electrodes 8b and 8c to bridge these terminal strips. To be specific, regarding each of the diodes 8A, 8B and 8C, the sealed portion 8a is supported by one of two adjacent terminal strips. Further, one of the leg electrodes is connected to this terminal strip, while the other of the leg electrodes extends toward the other of the adjacent terminal strips to bridge these terminal strips. The diode 8A bridges the terminal strips 1A and 1B to prevent flow of a reverse current therebetween. The diode 8B bridges the terminal strips 1B and 1C to prevent flow of a reverse current therebetween. The diode 8C bridges the terminal strips 1C and 1D to prevent flow of a reverse current therebetween (Fig. 9) .

As described above, the terminal box for a solar cell module of the present embodiment includes: the box body 20A fixed to the solar cell module 100; the four terminal strips 1A, 1B, 1C and 1D with good thermal conductivity arranged in parallel in the box body 20A, an output lead wire extending from the solar cell module 100 and the module coupling cables 16a and 16b extending to outside being connected to the terminal strips 1A, 1B, 1C and 1D; and the sealed portion 8a that is resin-sealed and the leg electrodes 8b and 8c extending from the sealed portion 8a. The terminal box for a solar cell module also includes the diodes 8A, 8B and 8C for bypass in reverse loading that bridge the four terminal strips 1A, 1B, 1C and 1D, and the heat dissipating plates 9A, 9B and 9C with good thermal conductivity extending over the bottom surface of the box body 20A with the diodes 8A, 8B and 8C being disposed thereon. The diodes 8A, 8B and 8C are interposed between the terminal strips 1A, 1B and 1D, and the heat dissipating plates 9A, 9B and 9C, respectively, as viewed in the vertical direction.

The terminal box for a solar cell module of the aforementioned structure includes the heat dissipating plates 9A, 9B and 9C with good thermal conductivity extending over the bottom surface of the box body 20A, and the four terminal strips 1A, 1B, 1C and 1D with good thermal conductivity, to which an output lead wire extending from the solar cell module 100 and the module coupling cables 16a and 16b extending to outside is connected. The sealed portions 8a of the diodes 8A, 8B and 8C provided for bypass in reverse loading are interposed between the heat dissipating plates 9A, 9B and 9C, and the terminal strips 1A, 1B and 1D, respectively. Thus, the heat can be dissipated efficiently from the lower surfaces of the sealed portions 8a through the heat dissipating plates 9A, 9B and 9C to the solar cell module 100. The heat can also be dissipated efficiently from the upper surfaces of the sealed portions 8a through the terminal strips 1A, 1B and 1D to the output lead wire and the module coupling cables 16b and 16c. As a result, a sufficient amount of heat can be dissipated as a whole.

The diodes 8A, 8B and 8C are disposed in a zigzag manner in the direction perpendicular to the direction in which the terminal strips 1A, 1B, 1C and 1D are arranged such that the diodes 8A, 8B and 8C are well spaced from each other. This prevents heat transferred from the diodes 8A, 8B and 8C to the terminal strips 1A, 1B and 1D from staying intensively in one place.

A space of the box body 20A in which the output part is stored may be filled with a potting material (heat conductive insulating resin) in order to enhance insulation properties. Filling with a potting material allows efficient transfer of heat from the upper surfaces of the sealed portions 8a to the potting material through the terminal strips 1A, 1B, 1C and 1D. Thus, a more sufficient amount of heat can be dissipated as a whole.

The four terminal strips 1A, 1B, 1C and 1D, and the three diodes 8A, 8B and 8C are provided in the present embodiment. Meanwhile, the present embodiment is also applicable to a terminal box with at least two terminal strips and one diode.

### Second Embodiment

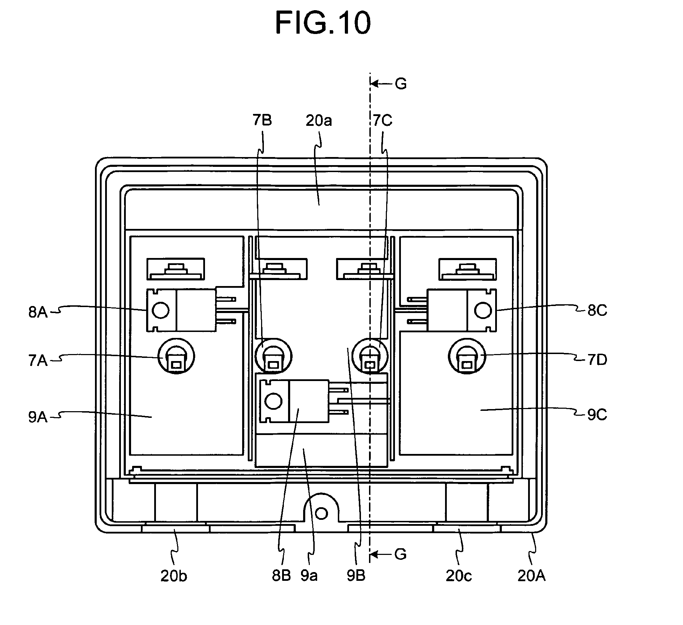

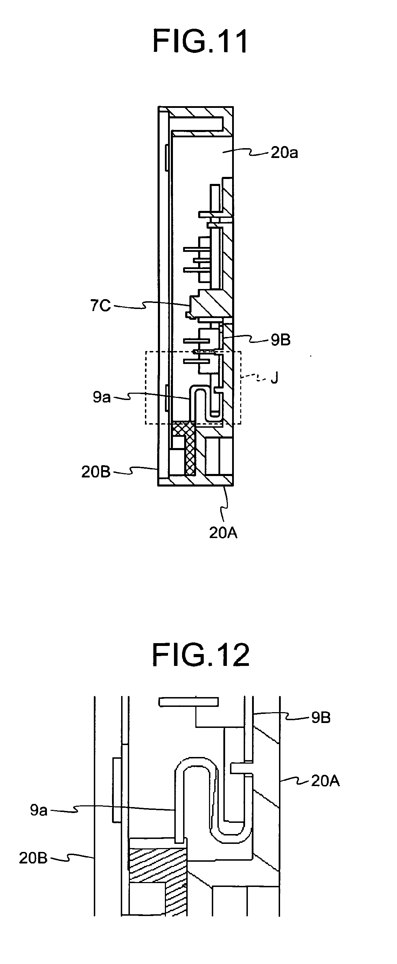

FIG. 10 is a front view of a terminal box for a solar cell module according to a second embodiment of the invention when a cover member and terminal strips are removed from the terminal box. FIG. 11 is a cross-sectional view taken along line G-G of FIG. 10. FIG. 12 is a longitudinal cross-sectional view showing part J of FIG. 11 in an enlarged manner. A heat dissipating plate 9B of the present embodiment has a heat dissipating fin 9a bent into an S shape in cross section, at an end portion on the side on which cable exit holes 20b and 20c are formed. The structure of the second embodiment is the same in other respects as that of the first embodiment.

A solar cell module of this structure dissipates heat of the heat dissipating plate 9B efficiently through the heat dissipating fin 9a. Accordingly, the heat generated in a diode 8B and transferred to the heat dissipating plate 9B can be dissipated efficiently through the heat dissipating fin 9a. Thus, a more sufficient amount of heat can be dissipated as a whole. Other two heat dissipating plates 9A and 9C may also be provided with the heat dissipating fin 9a.

### Third Embodiment

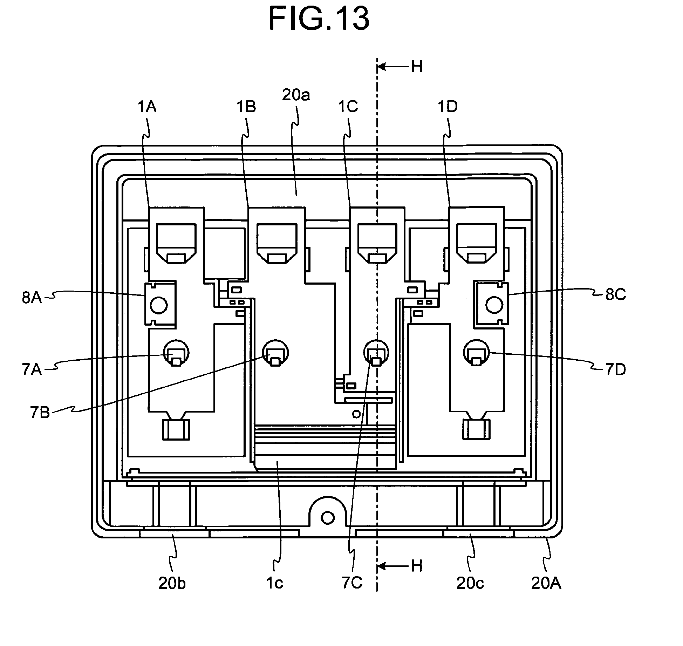

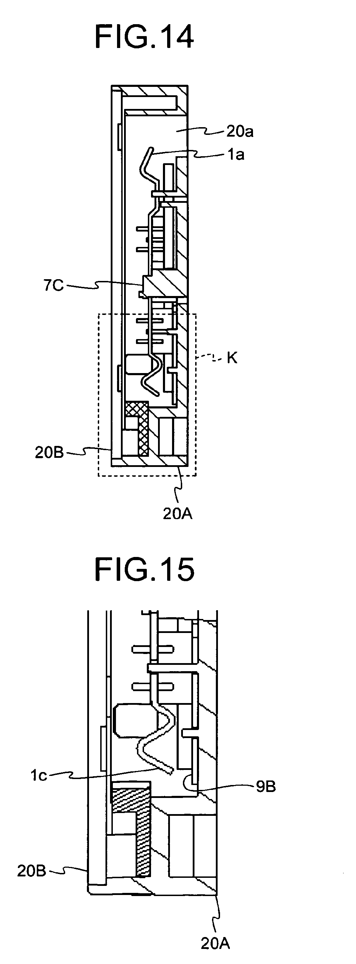

FIG. 13 is a front view of a terminal box for a solar cell module of a third embodiment of the invention when a cover member and terminal strips are removed from the terminal box. FIG. 14 is a cross-sectional view taken along line H-H of FIG. 13. FIG. 15 is a longitudinal cross-sectional view showing part K of FIG. 14 in an enlarged manner. A terminal strip 1B of the present embodiment has a heat dissipating fin 1c bent into the shape of a wave in cross section, at an end portion on a side opposite to the side on which a lead wire connecting portion 1a is formed. The structure of the third embodiment is the same in other respects as that of the first embodiment.

A solar cell module of this structure dissipates the heat of the terminal strip 1B efficiently through the heat dissipating fin 1c. Accordingly, the heat generated in a diode 8B and transferred to the terminal strip 1B can be dissipated efficiently through the heat dissipating fin 1c. Thus, a more sufficient amount of heat can be dissipated as a whole. Other two terminal strips 1A and 1D contacting diodes 8A and 8C may also have the heat dissipating fin 1c.

In the first to third embodiments described above, the terminal strips 1A, 1B and 1D are simply in surface contact with the sealed portions 8a of the diodes 8A, 8B and 8C. Meanwhile, elasticity may be imparted to parts of the terminal strips 1A, 1B and 1D in surface contact so that the sealed portions 8a can be in contact with the terminal strips 1A, 1B and 1D under certain pressing force. More specifically, this may be realized, for example, by bending the entire terminal strips, or by forming lugs partially in parts of the terminal strips to make contact. As a result, more reliable contact can be achieved, thereby enhancing the heat dissipation effect.

### Industrial Applicability

As described above, the terminal box for a solar cell module according to the present invention is useful when applied to a terminal box for a solar cell module that includes a rectifying element for bypass in reverse loading that bypasses the output of a solar cell. In particular, the terminal box for a solar cell module of the invention is applied optimally as a terminal box that includes a bypass rectifying element that generates a large amount of heat.

### Reference Signs List

- 1A, 1B, 1C, 1D: TERMINAL STRIP
- 1a: OUTPUT LEAD WIRE CONNECTING PORTION
- 1b: CABLE CONNECTING PORTION
- 1c: HEAT DISSIPATING FIN
- 4: OUTPUT PART
- 7A, 7B, 7C, 7D: PROJECTION
- 8A, 8B, 8C: BYPASS DIODE (RECTIFYING ELEMENT)
- 8a: SEALED PORTION
- 8b, 8c: LEG ELECTRODE
- 9A, 9B, 9C: HEAT DISSIPATING PLATE
- 9a: HEAT DISSIPATING FIN
- 12: SOLAR CELL
- 13: SUPPORT FRAME
- 14: REAR COVER MEMBER
- 16a, 16b: MODULE COUPLING CABLE (EXTERNAL CABLE)
- 20: TERMINAL BOX
- 20A: BOX BODY
- 20B: COVER MEMBER
- 20a: LEAD WIRE ENTRY
- 20b, 20c: CABLE EXIT HOLE
- 100: SOLAR CELL MODULE

## Claims

1. A terminal box forming an output part of a solar cell module, comprising:
a box body fixed to the solar cell module;
at least two terminal strips with good thermal conductivity arranged in parallel in the box body, with an output lead wire extending from the solar cell module and an external cable extending to outside being connected to the terminal strips;
a plurality of rectifying elements for bypass in reverse loading, the rectifying elements bridging the terminal strips, the rectifying elements each having a sealed portion that is resin-sealed, and a leg electrode extending from the sealed portion; and
a heat dissipating plate with good thermal conductivity, the heat dissipating plate extending over a bottom surface of the box body, with the rectifying elements being placed on the heat dissipating plate,
the sealed portions of the rectifying elements being interposed between the terminal strips and the heat dissipating plate.

2. The terminal box for a solar cell module according to claim 1, wherein
the terminal strips are three or more terminal strips arranged in parallel,
each of the rectifying elements is arranged between adjacent ones of the terminal strips, and
the rectifying elements are spaced apart from each other such that they are alternately arranged back and forth in a direction perpendicular to a direction in which the terminal strips are arranged.

3. The terminal box for a solar cell module according to claim 1 or 2, wherein the terminal strip has a heat dissipating fin in a wave form.

4. The terminal box for a solar cell module according to any one of claims 1 to 3, wherein the heat dissipating plate has a heat dissipating fin in a wave form.

5. The terminal box for a solar cell module according to any one of claims 1 to 4, further comprising a heat conductive insulating resin that fills the inside of the box body.

6. The terminal box for a solar cell module according to any one of claims 1 to 5, wherein the terminal strip has an elastic portion in contact with the sealed portion of the rectifying element under certain pressing force.
